Europäisches Patentamt

European Patent Office

Office européen des brevets

(19)

(11) Numéro de publication : **0 101 396**
**B1**

(12)

# FASCICULE DE BREVET EUROPÉEN

(45) Date de publication du fascicule du brevet :
**07.05.86**

(51) Int. Cl.⁴ : **B 62 B 15/00**

(21) Numéro de dépôt : **83440016.0**

(22) Date de dépôt : **28.02.83**

(54) **Dispositif de skis à voile.**

(30) Priorité : **11.08.82 FR 8214142**

(43) Date de publication de la demande :
**22.02.84 Bulletin 84/08**

(45) Mention de la délivrance du brevet :
**07.05.86 Bulletin 86/19**

(84) Etats contractants désignés :
**AT BE CH DE GB IT LI LU NL SE**

(56) Documents cités :
**DE-A- 2 824 997**
**DE-A- 3 014 665**
**FR-A- 2 365 356**
**FR-A- 2 493 789**
**US-A- 2 317 414**

(73) Titulaire : **Lecomte, François**
**"La Grande Chalande"**
**F-88530 Le Tholy (FR)**

(72) Inventeur : **Lecomte, François**
**"La Grande Chalande"**
**F-88530 Le Tholy (FR)**

(74) Mandataire : **Nuss, Pierre**
**10, rue Jacques Kablé**
**F-67000 Strasbourg (FR)**

Jouve, 18, rue St-Denis, 75001 Paris, France

## Description

La présente invention concerne le domaine des loisirs, notamment des loisirs sportifs, en particulier des articles de sport destinés à cet effet, et a pour objet un dispositif de skis à voile.

Actuellement, il existe divers dispositifs permettant d'allier la technique de la planche à voile à celle du ski. Ces dispositifs sont généralement constitués par une plate-forme s'adaptant de part et d'autre dans les fixations des skis et recevant un mât de planche à voile (FR-A-2 493 789), ou encore sous forme d'un berceau solidarisant les skis, et sur lequel est fixée une planche à voile complète (FR-A-2 365 356).

Cependant, dans le cas d'une plate-forme s'adaptant sur les skis au moyen d'un élément serré dans les fixations, le montage de la plate-forme est rigide, ne permettant aucun déplacement relatif entre plate-forme et skis, et les skis utilisés sont des skis de piste ou de fond ne permettant pratiquement pas de changement de direction ou de sens de marche par action sur la plate-forme et/ou sur le mât.

En outre, dans le cas d'utilisation d'un berceau de réception d'une planche à voile complète solidarisé avec des skis, l'encombrement du dispositif rend son transport difficile et réduit considérablement sa maniabilité.

La présente invention a pour but de pallier ces inconvénients.

Elle a, en effet, pour objet un dispositif de skis à voile qui, comme le dispositif décrit dans FR-A-2 493 789, est essentiellement constitué par une plate-forme de fixation du mât et de soutien de l'utilisateur pourvue d'un revêtement anti-dérapant, et solidaire d'une paire de skis, et qui en outre est caractérisé en ce que les skis présentent une section longitudinale incurvée à concavité vers le haut du centre vers les extrémités, qui sont munies chacune d'une spatule, et en ce que la partie centrale de chaque ski est pourvue d'un élément vertical rigide de fixation sur lequel sont montés des plots élastiques solidaires de la plate-forme.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue en perspective d'un dispositif conforme à l'invention ;

la figure 2 est une vue en élévation latérale, à plus petite échelle, du dispositif sans le mât ;

la figure 3 est une vue en plan suivant la figure 2, et

la figure 4 est une vue en élévation latérale, à plus grande échelle, partiellement en coupe, d'un ski équipé d'un patin à glace.

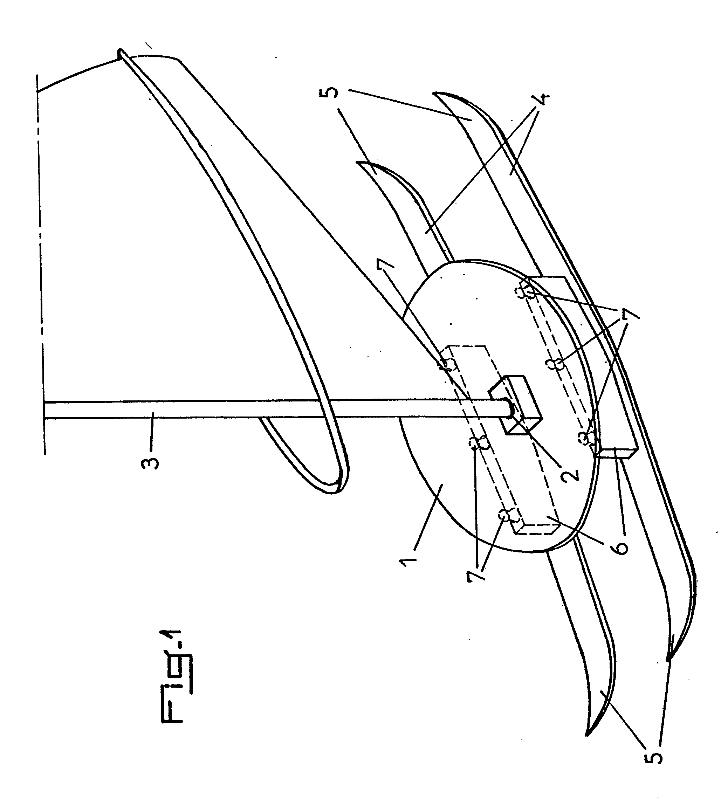

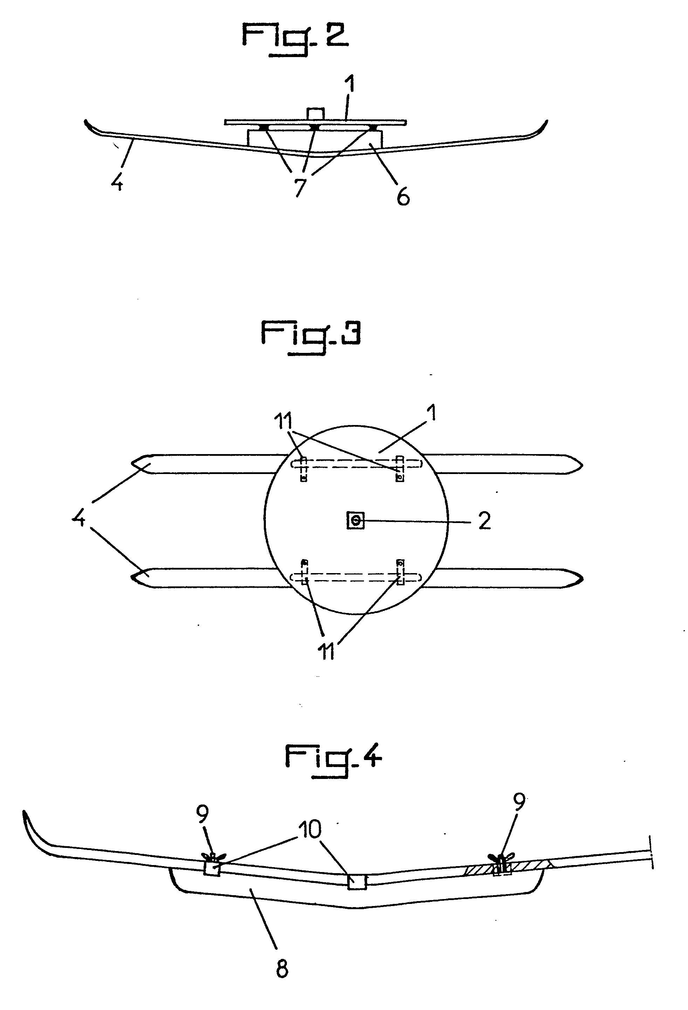

Conformément à l'invention, et comme le montrent plus particulièrement, les figures 1 à 3 des dessins annexés, le dispositif de skis à voile, qui est constitué par une plate-forme 1, servant au soutien de l'utilisateur, et munie d'un taquet 2 de fixation du mât 3 et d'un revêtement anti-dérapant, et par une paire de skis 4 solidaires de la plate-forme 1, est caractérisé en ce que les skis 4 présentent une section longitudinale incurvée à partir du centre vers chaque extrémité, et chacune de ces dernières est pourvue d'une spatule 5. La partie centrale de chaque ski 4 est équipée d'un élément vertical rigide de fixation 6 sur lequel sont montés des plots élastiques 7 solidaires de la plate-forme 1.

A titre d'exemple, les skis présentent avantageusement une longueur de 2 200 mm, une largeur de 87 mm, et une épaisseur de 20 mm, et la dénivellation entre le milieu et les extrémités est de préférence égale à 100 mm, de sorte qu'un effet de bascule peut être facilement obtenu.

Ces skis peuvent être réalisés de manière connue en bois lamellé collé enduit d'un revêtement synthétique, en matière synthétique, renforcée de fibre de verre ou en métal.

Grâce à leur forme incurvée et à leurs spatules avant et arrière, un changement de direction du dispositif est facile à réaliser par action sur la plate-forme 1 et sur le mât 3, à la manière de la commande d'une planche à voile.

En outre, la manœuvre est encore facilitée par la présence des plots élastiques 7, qui permettent un pivotement limité des skis parallèlement à l'axe longitudinal de la plate-forme 1, de sorte que le dispositif conforme à l'invention présente une très grande souplesse dans la neige.

Conformément à une variante de réalisation de l'invention, pour des évolutions sur glace, les skis 4 sont avantageusement munis de patins métalliques 8 s'étendant sous leur partie centrale, et fixés au moyen de vis 9, ou analogues, leur maintien latéral étant assuré, en outre, au moyen d'étriers 10 solidaires des patins 8 et s'appuyant sur les flancs des skis 4 (figure 4).

Dans un tel mode de réalisation, la plate-forme 1 est munie à sa partie inférieure d'organes de blocage des éléments rigides 6 de fixation des skis 4 annulant l'action des plots élastiques 7, sous forme de taquets pivotants 11 (figure 3) pouvant être amenés dans l'espace entre les éléments 6 et la plate-forme 1, ou sous forme d'étriers rabattables autour desdits éléments 6, ou de dispositifs analogues.

Le pivotement des taquets 11 entre les éléments 6 et la plate-forme 1 empêche, en effet, toute déformation des plots élastiques 7, de sorte que la liaison entre les éléments 6 et la plate-forme 1 devient une liaison rigide. Le même effet est obtenu au moyen d'étriers montés pivotant contre la plate-forme 1 et enserrant, en position de service, les éléments 6, de sorte que ces derniers ne peuvent plus pivoter relativement à ladite plate-forme 1.

Ce blocage de l'effet des plots élastiques 7 est nécessaire pour une utilisation du dispositif sur glace, du fait que les surfaces de contact sont fortement diminuées et qu'un pivotement d'un patin 8 relativement à la plate-forme 1 compromettrait gravement la stabilité du dispositif.

Selon une autre variante de réalisation de l'invention, non représentée aux dessins annexés, la plate-forme 1 peut être reliée à un monoski, l'élément rigide de fixation 6 étant alors relié au moyen des plots 7, à la plate-forme 1 le long de son axe longitudinal.

Grâce à l'invention, il est possible d'évoluer sur la neige en utilisant l'action du vent, et en mettant en œuvre une technique comparable à celle nécessaire pour la pratique de la planche à voile. En outre, grâce à la forme particulière des skis 4, un changement de direction ou de sens de marche est possible sans nécessiter de manœuvre annexe, telle qu'une manipulation du dispositif à l'arrêt.

Bien entendu, l'invention n'est pas limitée au mode de réalisation décrit et représenté aux dessins annexés.

**Revendications**

1. Dispositif de skis à voile, essentiellement constitué par une plate-forme (1) de fixation du mât (3) et de soutien de l'utilisateur pourvue d'un revêtement anti-dérapant, et solidaire d'une paire de skis (4), caractérisé en ce que les skis (4) présentent une section longitudinale incurvée à concavité vers le haut du centre vers les extrémités, qui sont munies chacune d'une spatule (5), et en ce que la partie centrale de chaque ski (4) est pourvue d'un élément vertical rigide de fixation (6) sur lequel sont montés des plots élastiques (7) solidaires de la plate-forme (1).

2. Dispositif, suivant la revendication 1, caractérisé en ce que, pour des évolutions sur glace, les skis (4) sont avantageusement munis de patins métalliques (8) s'étendant sous leur partie centrale, et fixés au moyen de vis (9), ou analogues, leur maintien latéral étant assuré, en outre, au moyen d'étriers (10) solidaires des patins (8) et s'appuyant sur les flancs des skis (4).

3. Dispositif, suivant la revendication 2, caractérisé en ce que la plate-forme (1) est munie à sa partie inférieure d'organes de blocage des éléments rigides (6) de fixation des skis (4) annulant l'action des plots élastiques (7), sous forme de taquets pivotants (11) pouvant être amenés dans l'espace entre les éléments (6) et la plate-forme (1), ou sous forme d'étriers rabattables autour desdits éléments (6), ou de dispositifs analogues.

4. Dispositif, suivant l'une quelconque des revendications 1 à 3, modifié en ce que la paire de skis est remplacée par un monoski, l'élément rigide de fixation (6) étant alors relié au moyen des plots (7), à la plate-forme (1) le long de son axe longitudinal.

**Claims**

1. Sail ski means, essentially constituted by a platform (1) for fixing the mast (3) and for supporting the user and which is provided with an anti-drag coating and which is integral with a pair of skis (4), characterized in that the skis (4) have an inwardly curved longitudinal section with an upward concavity from the centre towards the ends, each being provided with a tip (5), and in that the central part of each ski (4) is provided with a vertical rigid fixing element (6) on which are mounted elastic studs (7) integral with platform (1).

2. Means according to claim 1, characterized in that for movement on ice, the skis (4) are advantageously provided with metal runners (8) extending beneath their central part and fixed by means of screws (9) or the like, whereby they are also laterally held in place by means of stirrups (10) integral with the runners (8) and bearing on the sides of the skis (4).

3. Means according to claim 2, characterized in that the platform (1) is provided in its lower part with members for locking the rigid elements (6) for fixing the skis (4) cancelling the action of the elastic studs (7), in the form of pivoting brackets (11) which can be brought into the space between elements (6) and platform (1), or in the form of stirrups which can be folded down about said (6), or similar devices.

4. Means according to any one of claims 1 to 3, modified in that the pair of skis is replaced by a monoski, the rigid fixing element (6) then being connected by means of studs (7) to the platform (1) along its longitudinal axis.

**Patentansprüche**

1. Vorrichtung für Surfskier, im wesentlichen bestehend aus einer mit einem rutschfesten Belag versehenen Plattform (1) zur Befestigung des Mastes (3) und als Träger für den Benutze, und fest verbunden mit einem Paar Skier (4), dadurch gekennzeichnet, daß die Skier (4) einen von der Mitte zu den Endpunkten, die jeweils mit einer Spitze (5) ausgestattet sind, konkav nach oben gebogenen Längsschnitt aufweisen, und dadurch, daß das Mittelteil jedes Skis (4) mit einem starren, vertikalen Befestigungselement (6) versehen ist, auf welchem mit der Plattform (1) fest verbundene, elastische Klötzchen (7) montiert sind.

2. Vorrichtung nach Anspruch 1, dadurch gekennzeichnet, daß die Skier (4), für Bewegungen auf dem Eis, vorteilhaft mit unter ihrem Mittelteil sich erstreckenden Metallkufen (8) ausgestattet, und mittels Schrauben (9) oder ähnlichem befestigt sind, wobei, darüber hinaus, ihrer Seitenlage mit Hilfe von mit den Kufen (8) fest verbundenen und sich auf den Flanken der Skier (4) abstützenden Bügeln (10) Halt verliehen wird.

3. Vorrichtung nach Anspruch 2, dadurch gekennzeichnet, daß die Plattform (1) an ihrer Unterseite mit die Bewegung der elastischen Klötzchen (7) aufhebenden Sperrorganen für die starren Elemente (6) zur Befestigung der Skier (4), in Form von Schwenkstoppern (11), welche in dem Zwischenraum zwischen den Elementen (6) und der Plattform (1) eingeführt werden können, oder in Form von um die besagten Elemente (6) herumklappbaren Bügeln, oder ähnlichen Einrichtungen, ausgestattet ist.

4. Vorrichtung nach einem der Ansprüche 1 bis 3, darin abgewandelt, daß das Paar Skier durch einen Monoski ersetzt wird, wobei dann das starre Befestigungselement (6) entlang seiner Längsachse über die Klötzchen (7) mit der Plattform (1) verbunden ist.

Fig.1

# Fig. 2

1

4

7

6

# Fig.3

11

1

4

2

11

# Fig.4

9

9

10

8